# EUROPEAN PATENT APPLICATION

(11) **EP 4 712 453 A1**
(43) Date of publication of application: **18.03.2026**
(21) Application number: 24802862.3
(22) Date of filing: 30.04.2024
(51) Int. Cl.: H04L 69/22, H04L 9/40

(54) **MULTI-LAYER COMMUNICATION METHOD AND SYSTEM, DEVICE, AND MEDIUM**

(30) Priority: 06.05.2023 CN 202310507450
(71) Applicant: Beijing Roborock Innovation Technology Co., Ltd., Beijing 102206 (CN)
(72) Inventor: LI, Tianyi, Beijing 102206 (CN)
(74) Representative: Maiwald GmbH
(86) International application number: PCT/CN2024/090802
(87) International publication number: WO 2024/230580

(57) **Abstract**

The present application discloses a multi-layer communication method and system, a device, and a medium. The method is applied to the multi-layer communication system. The system comprises N layers of communication components, wherein N is a natural number greater than 1. The method comprises: after receiving instruction data, a target layer of communication component in the N layers of communication components determines whether the instruction data is instruction data needing to be processed by the current layer of communication component or not; if yes, the target layer of communication component executes the instruction data; and if not, the target layer of communication component encrypts the instruction data and sends the encrypted instruction data to a next layer of communication component of the target layer of communication component.

## Description

### CROSS-REFERENCE TO RELATED APPLICATION

The present application claims priority to Chinese Patent Application No. 2023105074509, filed on May 6, 2023 and entitled "MULTI-LEVEL COMMUNICATION METHOD AND SYSTEM, DEVICE, AND MEDIUM", which is incorporated herein by reference in its entirety.

### TECHNICAL FIELD

The present disclosure relates to a multi-level communication method and system, a device, and a medium.

### BACKGROUND ART

With the advancement of communication technologies such as the Internet of Things, multi-level communications are finding increasingly widespread applications. Various electronic devices are interconnected in a multi-level communication system for better coordination and control.

However, in an existing multi-level communication system, a top-level component is typically in charge of receiving and initiating instruction data, while an intermediate-level serves as a distribution, coordination and transmission channel for the instruction data, and a bottom-level component executes the instructions. This results in significant time and resource consumption during data transmission through the intermediate level, causing insufficient efficiency.

### SUMMARY OF THE APPLICATION

In a first aspect, embodiments of the present disclosure provide a multi-level communication method. The method is applied to a multi-level communication system including N levels of communication components, where N is a natural number greater than 1, and the method includes: determining, by a target-level communication component in the N levels of communication components after receiving instruction data, whether the instruction data is instruction data needed to be processed by the current level of communication component; executing, if a determination result is positive, the instruction data by the target-level communication component; and encrypting, if the determination result is negative, the instruction data and issuing encrypted instruction data to a next level of communication component with respect to the target-level communication component by the target-level communication component.

In a second aspect, embodiments of the present disclosure provide an electronic device, including a target-level communication component in a multi-level communication system. The target-level communication component includes: a determination module configured to determine, after receiving instruction data, whether the instruction data is instruction data needed to be processed by the current level of communication component; an execution module configured to execute the instruction data if a determination result of the determination module is positive; and an issuing module configured to encrypt the instruction data and issue encrypted instruction data to a next level of communication component if the determination result of the determination module is negative.

In a third aspect, embodiments of the present disclosure provide a multi-level communication system. At least one level of communication components in the system is the target-level communication component in the electronic device according to the second aspect.

In a fourth aspect, embodiments of the present disclosure provide a computer-readable storage medium, storing a computer program thereon. The program, when executed by a processor, implements steps corresponding to the method according to the first aspect.

### BRIEF DESCRIPTION OF THE DRAWINGS

For clearer descriptions of the technical solutions in embodiments of the present disclosure, the following briefly introduces the accompanying drawings required for describing the embodiments. Apparently, the accompanying drawings in the following description show some embodiments of the present disclosure, and a person of ordinary skill in the art may still derive other drawings from these accompanying drawings without creative efforts.
FIG. 1 is a schematic flowchart of a multi-level communication method according to an embodiment of the present disclosure;
FIG. 2 is a schematic structural diagram of a multi-level communication system according to an embodiment of the present disclosure;
FIG. 3 is a schematic diagram showing a communication example in a multi-level communication system according to an embodiment of the present disclosure;
FIG. 4 is a first schematic diagram showing compatibility among different communication protocols for multi-level communication according to an embodiment of the present disclosure;
FIG. 5 is a second schematic diagram showing compatibility among different communication protocols for multi-level communication according to an embodiment of the present disclosure; and
FIG. 6 is a schematic structural diagram of an electronic device according to an embodiment the present disclosure.

### DETAILED DESCRIPTION

For better understanding of the above technical solutions, the above technical solutions will be described in detail below with reference to the accompanying drawings of the description and specific implementations. It should be understood that embodiments of the present disclosure and specific features in the embodiments are detailed descriptions of the technical solutions of the present disclosure, rather than limitations to the technical solutions of the present disclosure. In the absence of conflict, the embodiments of the present disclosure and the technical features in the embodiments can be combined with each other.

First of all, the term "and/or" herein only describes an association relationship between associated objects and indicates that there may be three relationships. For example, A and/or B may indicate three situations: A exists alone, A and B exist simultaneously, and B exists alone. In addition, the character "/" herein generally indicates that an "or" relationship exists between contextual objects.

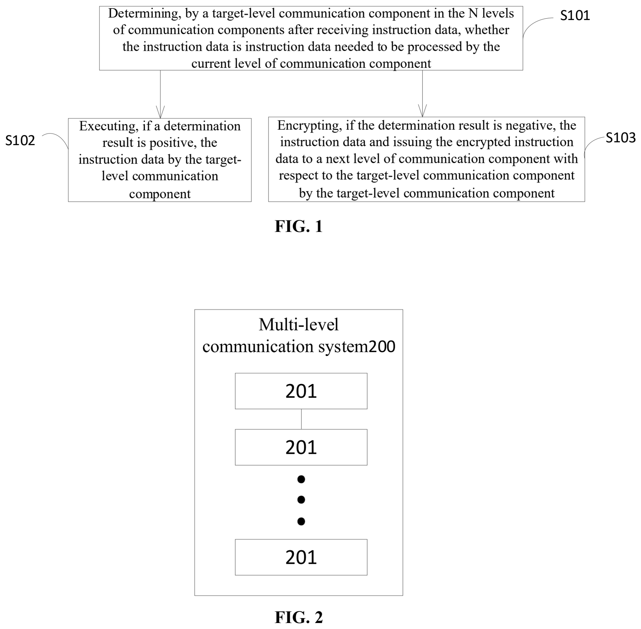

In the embodiments of the present disclosure, a multi-level communication method is provided. The method is applied to a multi-level communication system including N levels of communication components, where N is a natural number greater than 1. As shown in FIG. 1, the method includes the following steps.

In step S101, after receiving instruction data, a target-level communication component in the N levels of communication components determines whether the instruction data is instruction data needed to be processed by the current level of communication component.

In step S102, if the determination result is positive, the target-level communication component executes the instruction data.

In step S102, if the determination result is negative, the target-level communication component encrypts the instruction data and issues the encrypted instruction data to a next level of communication component with respect to the target-level communication component.

It should be noted that as shown in FIG. 2, each level of communication components in the multi-level communication system 200 may include one or more communication components 201, and respective communication components 201 have established a communication connection in advance according to a set communication hierarchy. The target-level communication component is a communication component capable of processing the instruction data according to steps S101 to S103. The target-level communication component at least has the functions of receiving instruction data; determining whether the instruction data is to be processed by the current level of communication component; executing the corresponding instruction data; and encrypting the instruction data and issuing the encrypted instruction data to a next level of communication component. Each level of communication components in the multi-level communication system 200 may be the target-level communication component, or each of some levels of communication components in the multi-level communication system 200 may be the target-level communication component, which is not limited here.

The following describes in detail the implementation steps of the multi-level communication method provided by the present disclosure with reference to FIG. 1.

Regarding step S101, after receiving instruction data, the target-level communication component in the N levels of communication components determines whether the instruction data is instruction data needed to be processed by the current level of communication component.

In an optional implementation, the target-level communication component may be any level of communication component among the N levels of communication components. The instruction data may be issued to the target-level communication component from an external device or from a previous level of communication component with respect to the target-level communication component, or may be generated by the target-level communication component upon triggering by a timer or a sensor, which is not limited here and will not be listed one by one.

In an optional implementation, there may be multiple ways to determine whether the instruction data is instruction data needed to be processed by the current level of communication component. For example, the instruction data may carry a corresponding execution object identifier. After receiving the instruction data, the target-level communication component obtains the execution object identifier in the instruction data, and determines whether the instruction data needs to be processed by the current level of communication component according to the identifier. Alternatively, the target-level communication component parses content to be executed of the instruction data, analyses whether the content to be executed falls within an execution scope of the current level of communication component, and thus determines whether the instruction data needs to be processed by the current level of communication component, which is not limited here.

In an optional implementation, after receiving the instruction data, the target-level communication component may first parse the instruction data, and then determine whether the instruction data needs to be processed by the current level of communication component based on the parsed instruction data. The step of parsing the instruction data may include: decrypting the instruction data first, and verifying validity of the decrypted instruction data to ensure the accuracy of the data.

Regarding step S102, if it is determined that the instruction data is instruction data needed to be processed by the current level of communication component, the target-level communication component executes the instruction data.

Specifically, the target-level communication component, whether located in an intermediate level or a top level of the multi-level communication system, can directly execute the instruction data when the determination result is positive, without issuing the instruction data to a bottom-level component for execution. This effectively improves execution efficiency and reduces communication resource consumption.

For example, assuming that the multi-level communication system includes five levels of communication components, i.e., a top-level component, an upper-level component, an intermediate-level component, a lower-level component and a bottom-level component from top to bottom, and each level of components except the bottom-level component can be provided with functions of the target-level communication component, including data determination, data processing, and data issuing. Assuming that an execution level corresponding to the instruction data is the lower-level component, the lower-level component can directly execute the instruction data upon receiving it, without issuing it to the bottom-level component. This effectively improves processing efficiency.

For another example, assuming that the target-level communication component in the multi-level communication system is located in the intermediate level, the target-level communication component includes a power supply component of a projector, and content, which needs to be executed and is carried in the instruction data, is to control the projector for power off. If the target-level communication component determines that the instruction data is instruction data needed to be executed by the current level of communication component, then a controller of the power supply component executes the instruction data, i.e., the controller directly turns off the power supply.

In an optional implementation, after executing the instruction data, the target-level communication component can also return result data obtained by executing the instruction data to an initiating-level communication component that initiates the instruction data (the initiating-level communication component may be a level of communication components that first obtains the instruction data in the multi-level communication system). The initiating-level communication component may be at the top level of the multi-level communication system, or be at any one of other intermediate levels of the multi-level communication system, or just be the target-level communication component (in this case, the result data is returned to the current level itself), which is not limited here.

Regarding step S103, if it is determined that the instruction data is not instruction data needed to be processed by the current level of communication component, the target-level communication component encrypts the instruction data and issues the encrypted instruction data to the next level of communication component with respect to the target-level communication component.

The step of encrypting the instruction data may include: packaging the parsed instruction data, and encrypting the packaged instruction data.

**In** an optional implementation, after receiving the instruction data, the next level of communication component with respect to the target-level communication component can perform determination on the instruction data in the same manner as steps S101 to S103, and determine, based on a determination result, whether to directly execute the instruction data or continue to issue the instruction data to the next level of communication component.

Specifically, each level of components except the bottom-level component in the multi-level communication system may be provided with the functions of the target-level communication component, including data determination, data processing, and data issuing. That is to say, each level of components except the bottom-level component can perform determination on the instruction data in the same manner as steps S101 to S103, and determine, based on the determination result, whether to directly execute the instruction data or continue to issue the instruction data to the next level of communication component.

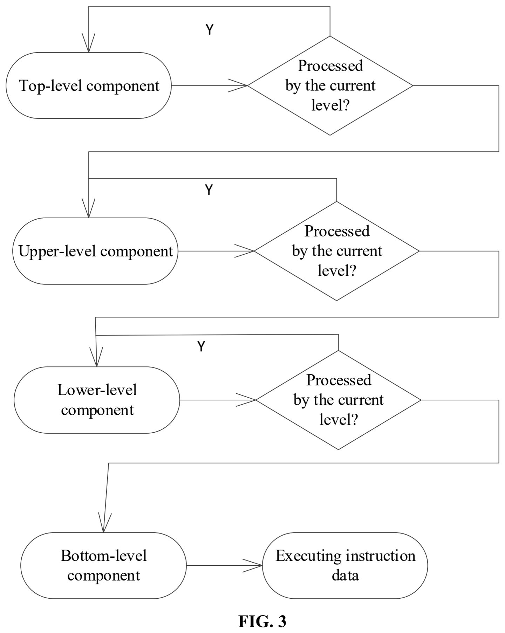

Referring to FIG. 3, assuming that the multi-level communication system includes four levels of communication components, which are a top-level component, an upper-level component, a lower-level component and a bottom-level component from top to bottom. It may be configured such that, after receiving the instruction data, the top-level component performs determination on the instruction data first, and directly executes the instruction data if the instruction data is instruction data needed to be processed by the current level or issues the instruction data to the upper-level component if the instruction data is not instruction data needed to be processed by the current level. After receiving the instruction data, the upper-level component may perform determination on the instruction data first, and directly execute the instruction data if the instruction data is instruction data needed to be processed by the current level or issue the instruction data to the lower-level component if the instruction data is not instruction data needed to be processed by the current level. After receiving the instruction data, the lower-level component may perform determination on the instruction data first, and directly execute the instruction data if the instruction data is instruction data needed to be processed by the current level or issue the instruction data to the bottom-level component if the instruction data is not instruction data needed to be processed by the current level. In this way, each level of communication components can directly execute the instruction data, thereby ensuring execution efficiency for different control scenarios.

In an optional implementation, in order to ensure the transmission reliability of the instruction data and avoid missed execution, it may be configured such that, after issuing the encrypted instruction data to the next level of communication component, the target-level communication component enters a timeout waiting state in which the target-level communication component continuously monitors whether result data obtained by executing the instruction data is received within a preset timeout duration. If the monitoring result is positive, the target-level communication component exits the timeout waiting state; and if the monitoring result is negative, the target-level communication component reissues the encrypted instruction data to the next level of communication component. Of course, in order to prevent more than one level of communication components in the multi-level communication system from entering the timeout waiting state based on the same instruction data, it may also be configured such that only the initiating-level communication component of the instruction data will enter the timeout waiting state after issuing the instruction data to save system resources.

During specific implementation, due to factors such as variousness of communication component devices across different levels, collaborative development of various manufacturers, or varying progress in communication protocol version updates, different levels within the multi-level communication system may apply different communication protocols. In order to ensure the reliability of data transmission and data processing of respective levels of communication components and improve compatibility under different communication protocols, other communication protocols besides the communication protocol of the current level may be stored in the target-level communication component, and different communication protocols may be selected for decryption and encryption of the instruction data to be compatible with the initiator or a receiver of the instruction data so as to achieve compatibility among different communication protocols. For example, the following two methods may be used at least to achieve compatibility among communication protocols.

In a first method in the two methods, it may be configured that the target-level communication component pre-stores a communication protocol corresponding to a previous level of communication component with respect to the target-level communication component and a communication protocol corresponding to the current level of communication component. In this way, if the received instruction data is issued by its previous level of communication component, even if the communication protocols are different, the pre-stored previous-level communication protocol can be used to accurately parse the received instruction data to ensure data accuracy. Further, it may be configured such that each level of communication components in the multi-level communication system pre-stores a communication protocol corresponding to its previous level of communication component and a communication protocol corresponding to the current level of communication component. In this way, the pre-stored previous-level communication protocol can be used to accurately parse the instruction data issued by the previous level of communication component, and the pre-stored current-level communication protocol can further be used to encrypt the parsed instruction data and then issue it to a next level, so that the next level of communication component can accurately parse the received instruction data using the pre-stored current-level communication protocol. This ensures that even if the communication protocols corresponding to the various levels of communication components are different, each level of communication component can parse the instruction data issued by its previous level of communication component to achieve compatibility.

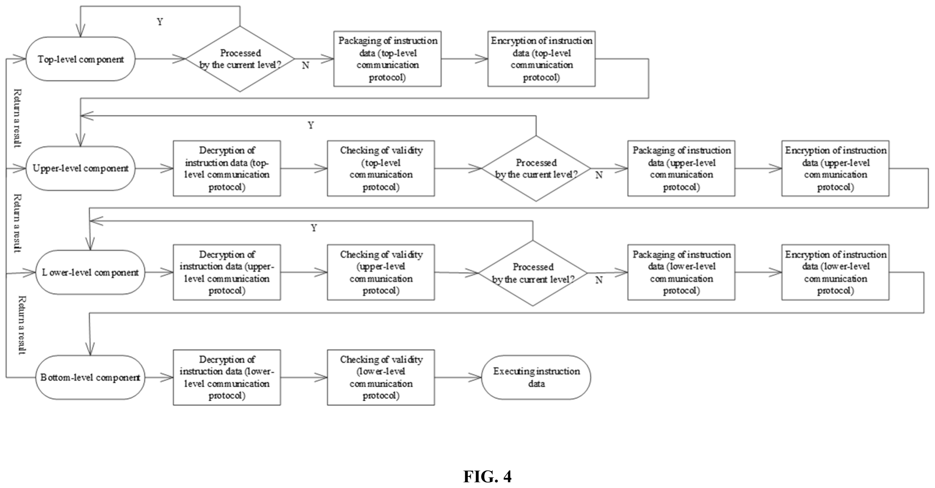

For example, referring to FIG. 4, assuming that the multi-level communication system includes four levels of communication components, i.e., a top-level component, an upper-level component, a lower-level component, and a bottom-level component. The detailed execution steps are as follows.

After receiving the instruction data, the top-level component first performs determination on the instruction data, and directly executes the instruction data if it is the instruction data needed to be processed by the current level, or packages and encrypts the instruction data using a top-level communication protocol corresponding to the top-level component if it is not instruction data needed to be processed by the current level and then issues it to the upper-level component for processing.

After receiving the instruction data, the upper-level component first decrypts the instruction data and checks its validity using the pre-stored top-level communication protocol. Then the upper-level component performs determination on the instruction data, and directly executes the instruction data if the instruction data is instruction data needed to be processed by the current level, or packages and encrypts the instruction data using an upper-level communication protocol corresponding to the upper-level component if it is not instruction data needed to be processed by the current level and then issues it to the lower-level component for processing.

After receiving the instruction data, the lower-level component first decrypts the instruction data and checks its validity using the pre-stored upper-level communication protocol. Then the lower-level component performs determination on the instruction data, and directly executes the instruction data if the instruction data is instruction data needed to be processed by the current level, or packages and encrypts the instruction data using a lower-level communication protocol corresponding to the lower-level component if it is not instruction data needed to be processed by the current level and then issues it to the bottom-level component for processing.

After receiving the instruction data, the bottom-level component first decrypts the instruction data and checks its validity using the pre-stored lower-level communication protocol and then executes the instruction data.

In a second method in the two methods, it may also be configured such that the target-level communication component pre-stores a communication protocol corresponding to a next level of communication component with respect to the target-level communication component and a communication protocol corresponding to the current level of communication component. In this way, the pre-stored current-level communication protocol can be used to parse the instruction data, and then the pre-stored next-level communication protocol can be used to encrypt the parsed instruction data and then the encrypted instruction data is issued to the next level, so that the next level of communication component can accurately parse the received instruction data even if the communication protocols are different, thereby ensuring data accuracy. Further, it may be configured such that each level of communication components in the multi-level communication system pre-stores a communication protocol corresponding to a next level of communication component and a communication protocol corresponding to the current level of communication component. In this way, the current-level communication protocol can be used to parse the instruction data issued by the previous level of communication component, and the pre-stored next-level communication protocol can also be used to encrypt the parsed instruction data and then the encrypted instruction data is issued to the next level, so that the next level of communication component can accurately parse the received instruction data. This ensures that even if the communication protocols corresponding to the various levels of communication components are different, each level of communication component can parse the instruction data issued by its previous level of communication component to achieve compatibility.

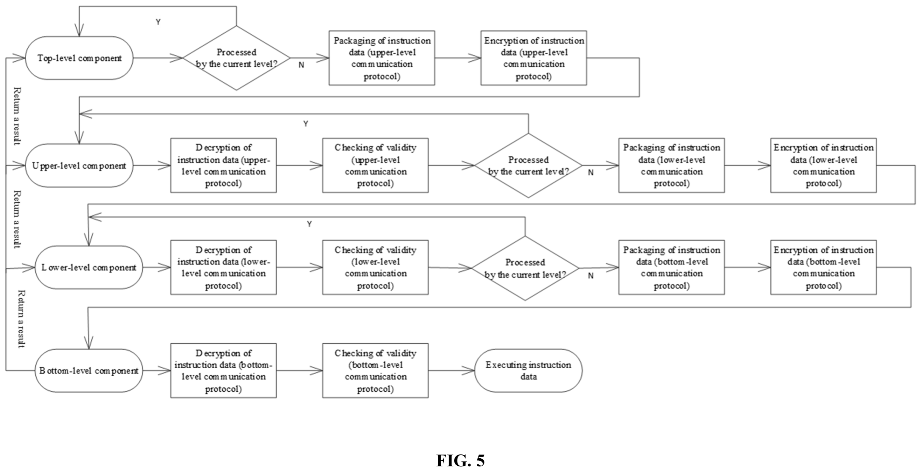

For example, referring to FIG. 5, assuming that the multi-level communication system includes four levels of communication components, i.e., a top-level component, an upper-level component, a lower-level component, and a bottom-level component. The detailed execution steps are as follows.

After receiving the instruction data, the top-level component first performs determination on the instruction data, and directly executes the instruction data if it is instruction data needed to be processed by the current level, or packages and encrypts the instruction data using an upper-level communication protocol corresponding to the upper-level component if it is not instruction data needed to be processed by the current level and issues it to the upper-level component for processing.

After receiving the instruction data, the upper-level component first decrypts the instruction data and checks its validity using the current-level communication protocol. Then the upper-level component performs determination on the instruction data, and directly executes the instruction data if the instruction data is instruction data needed to be processed by the current level, or packages and encrypts the instruction data using a lower-level communication protocol corresponding to the lower-level component if it is not instruction data needed to be processed by the current level and issues it to the lower-level component for processing.

After receiving the instruction data, the lower-level component first decrypts the instruction data and checks its validity using the current-level communication protocol. Then the lower-level component performs determination on the instruction data, and directly executes the instruction data if the instruction data is instruction data needed to be processed by the current level, or packages and encrypts the instruction data using a bottom-level communication protocol corresponding to the bottom-level component if it is not instruction data needed to be processed by the current level and issues it to the bottom-level component for processing.

After receiving the instruction data, the bottom-level component first decrypts the instruction data and checks its validity using the current-level communication protocol and then executes the instruction data.

Of course, the methods for achieving compatibility among communication protocols are not limited to the above two methods. It is also possible that the target-level communication component stores multiple communication protocols, and decrypts the instruction data and checks its validity using a corresponding communication protocol selected based on the source of the received instruction data, or encrypts the instruction data using a corresponding communication protocol selected based on a receiver of the instruction data, which is not limited here.

In an optional implementation, the multi-level communication system can be constructed flexibly. For example, by taking a floor scrubber product with a vacuum cleaner component as an example, it may be configured such that the top-level communication component is an IoT chip or a router, the upper-level communication component includes a main controller of the floor scrubber, the lower-level communication component includes a controller of the vacuum cleaner component on the floor scrubber and a controller of a charging dock of the floor scrubber, and the bottom-level communication component includes a controller of a fan on the floor scrubber and a controller of a battery on the floor scrubber.

By taking the multi-level communication system of the above-mentioned floor scrubber as an example, assuming that the instruction data is to query a battery state, specific communication steps may be as follows: the IoT chip is triggered externally to generate instruction data to query the battery state, and issues it to the main controller of the floor scrubber. The main controller of the floor scrubber parses the instruction data using a pre-stored communication protocol of the IoT chip, encrypts the instruction data, and then issues the encrypted instruction data to the controller of the vacuum cleaner component. The controller of the vacuum cleaner component parses the instruction data using a pre-stored communication protocol of the main controller of the floor scrubber, encrypts the instruction data and then issues encrypted instruction data to the controller of the battery. The controller of the battery parses the instruction data using a pre-stored communication protocol of the controller of the vacuum cleaner component, queries the battery state, and returns a query result to the controller of the vacuum cleaner component, and the query result is returned level by level to the IoT chip, completing the battery state query.

Of course, the communication components of the multi-level communication system are not limited to being housed within one electronic device, it is also possible to establish the multi-level communication system by a plurality of electronic devices. For example, the top-level communication component is a router or a voice robot, the upper-level communication component is a projector controller, and the bottom-level communication component is an audio device. This is not limited here and can be set according to needs.

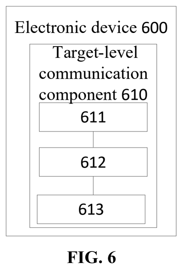

Based on the same concept, embodiments of the present disclosure provide an electronic device, and as shown in FIG. 6, the electronic device 600 includes a target-level communication component 610 in a multi-level communication system. The target-level communication component 610 includes:
a determination module 611 configured to determine, after receiving instruction data, whether the instruction data is instruction data needed to be processed by the current level of communication component;
an execution module 612 configured to execute the instruction data if a determination result of the determination module is positive; and
an issuing module 613 configured to encrypt the instruction data and issue the encrypted instruction data to a next level of communication component if the determination result of the determination module is negative.

It should be noted that the electronic device may include one or more target-level communication components 610. The electronic device may be a handheld cleaning device, a cleaning robot, a projector, or a washing machine, etc., which is not limited here.

**In** an optional implementation, the target-level communication component 610 further includes a parsing module configured to parse the instruction data using a pre-stored previous-level communication protocol which is a communication protocol corresponding to a previous level of communication component with respect to the target-level communication component; and
the issuing module 610 is further configured to encrypt the parsed instruction data using a pre-stored current-level communication protocol which is a communication protocol corresponding to the target-level communication component.

**In** an optional implementation, the target-level communication component 610 further includes a parsing module configured to parse the instruction data using a pre-stored current-level communication protocol which is a communication protocol corresponding to the target-level communication component; and
the issuing module 601 is further configured to encrypt the parsed instruction data using a pre-stored next-level communication protocol which is a communication protocol corresponding to a next level of communication component of the target-level communication component.

Based on the same concept, embodiments of the present disclosure provide a multi-level communication system, and as shown in FIG. 2, at least one level of communication components 201 in the multi-level communication system 200 is a target-level communication component 610 in the electronic device 600 according to the embodiments of the present disclosure.

**In** an optional implementation, in the multi-level communication system 200, each level of communication components except the bottom-level communication component is capable of serving as the target-level communication component 610.

Based on the same concept, embodiments of the present disclosure provide a computer-readable storage medium having a computer program stored thereon. The program, when executed by a processor, implements steps corresponding to the multi-level communication method according to the present disclosure.

Since the device, system and medium introduced in the embodiments are the device, system and medium used to implement the multi-level communication method in the embodiments of the present disclosure, based on the multi-level communication method introduced in the embodiments of the present disclosure, those skilled in the art can understand the specific implementations and various variations of the device, system and medium in the embodiments. Hence, how the device, system and medium implement the methods in the embodiments of the present disclosure will not be introduced in detail here. Any device, system, and medium adopted by those skilled in the art to implement the multi-level communication method in the embodiments of the present disclosure fall within the scope of protection of the present disclosure.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage, CD-ROMs, optical storage, etc.) containing computer-usable program codes.

The present disclosure is described with reference to flowcharts and/or block diagrams of methods, devices (systems), and computer program products according to the embodiments of the present disclosure. It should be understood that each process and/or block in the flowcharts and/or block diagrams and combinations of processes and/or blocks in the flowcharts and/or block diagrams can be implemented by computer program instructions. These computer program instructions can be provided to a processor of a general-purpose computer, a special-purpose computer, an embedded processor, or other programmable data processing device to produce a machine, so as to create, by means of the instructions which are executed via the processor of the computer or other programmable data processing device, means for implementing the functions specified in one or more processes of the flowchart and/or one or more blocks of the block diagram.

These computer program instructions may also be stored in a computer-readable memory that can direct a computer or other programmable data processing device to operate in a specific manner, so that the instructions stored in the computer-readable memory produce a product including an instruction device that implements the functions specified in one or more processes in the flowchart and/or one or more blocks in the block diagram.

These computer program instructions can also be loaded onto a computer or other programmable data processing device, so that a series of operating steps are executed on the computer or other programmable device to produce computer-implemented processing. Thus, the instructions executed on the computer or other programmable device provide steps for implementing the functions specified in one or more processes in the flowchart and/or one or more blocks in the block diagram.

Although preferred embodiments of the present disclosure have been described, additional changes and modifications may be made to these embodiments once those skilled in the art understand the basic inventive concept. Therefore, the appended claims are intended to be interpreted as including preferred embodiments and all changes and modifications falling within the scope of the present disclosure.

Obviously, those skilled in the art can make various alterations and variations to the present disclosure without departing from the spirit and scope of the present disclosure. Thus, if these alterations and variations of the present disclosure fall within the scope of the claims of the present disclosure and their equivalents, the present disclosure is intended to include these alteration and variations.

An embodiment of the present disclosure provides a multi-level communication method. The method is applied to a multi-level communication system including N levels of communication components, where N is a natural number greater than 1 and the method includes:
determining, by a target-level communication component in the N levels of communication components after receiving instruction data, whether the instruction data is instruction data needed to be processed by the current level of communication component;
executing, if a determination result is positive, the instruction data by the target-level communication component; and
encrypting, if the determination result is negative, the instruction data and issuing the encrypted instruction data to a next level of communication component with respect to the target-level communication component, by the target-level communication component.

In an optional example, the method further includes: parsing, before determining whether the instruction data is instruction data needed to be processed by the current level of communication component, the instruction data using a pre-stored previous-level communication protocol which is a communication protocol corresponding to a previous level of communication component with respect to the target-level communication component; and encrypting the instruction data includes: encrypting the parsed instruction data using a pre-stored current-level communication protocol which is a communication protocol corresponding to the target-level communication component.

In an optional example, the method further includes: parsing, before determining whether the instruction data is instruction data needed to be processed by the current level of communication component, the instruction data using a pre-stored current-level communication protocol which is a communication protocol corresponding to the target-level communication component; and encrypting the instruction data includes: encrypting the parsed instruction data using a pre-stored next-level communication protocol which is a communication protocol corresponding to the next level of communication component with respect to the target-level communication component.

In an optional example, parsing the instruction data includes: decrypting the instruction data and verifying validity of the decrypted instruction data; and encrypting the instruction data includes: packaging the parsed instruction data and encrypting the packaged instruction data.

In an optional example, the method further includes: returning, after executing the instruction data by the target-level communication component, result data obtained by executing the instruction data to an initiating-level communication component that initiates the instruction data.

In an optional example, the method further includes: entering, after issuing the encrypted instruction data to the next level of communication component with respect to the target-level communication component, a timeout waiting state in which the target-level communication component monitors whether result data obtained by executing the instruction data is received within a preset timeout duration; exiting the timeout waiting state if a monitoring result is positive; and reissuing the encrypted instruction data to the next level of communication component with respect to the target-level communication component if the monitoring result is negative.

Another embodiment of the present disclosure provides an electronic device, including a target-level communication component in a multi-level communication system. The target-level communication component includes:
a determination module configured to determine, after receiving instruction data, whether the instruction data is instruction data needed to be processed by the current level of communication component;
an execution module configured to execute the instruction data if a determination result of the determination module is positive; and
an issuing module configured to encrypt the instruction data and issue the encrypted instruction data to a next level of communication component if the determination result of the determination module is negative.

In an optional example, the target-level communication component further includes a parsing module configured to parse the instruction data using a pre-stored previous-level communication protocol which is a communication protocol corresponding to a previous level of communication component with respect to the target-level communication component; and the issuing module is further configured to encrypt the parsed instruction data using a pre-stored current-level communication protocol which is a communication protocol corresponding to the target-level communication component.

In an optional example, the target-level communication component further includes a parsing module configured to parse the instruction data using a pre-stored current-level communication protocol which is a communication protocol corresponding to the target-level communication component; and the issuing module is further configured to encrypt the parsed instruction data using a pre-stored next-level communication protocol which is a communication protocol corresponding to the next level of communication component with respect to the target-level communication component.

Still another embodiment of the present disclosure provides a multi-level communication system. At least one level of communication components in the system is the target-level communication component in the electronic device described above.

In an optional example, in the multi-level communication system, each level of communication components except a bottom-level communication component is capable of serving as the target-level communication component.

Yet still another embodiment of the present disclosure provides a computer-readable storage medium, storing a computer program thereon. The program, when executed by a processor, implements steps corresponding to the multi-level communication method described above.

## Claims

1. A multi-level communication method, wherein the method is applied to a multi-level communication system comprising N levels of communication components, where N is a natural number greater than 1, and the method comprises:
determining, by a target-level communication component in the N levels of communication components after receiving instruction data, whether the instruction data is instruction data needed to be processed by a current level of communication component;
executing, if a determination result is positive, the instruction data by the target-level communication component; and
encrypting, if the determination result is negative, the instruction data and issuing encrypted instruction data to a next level of communication component with respect to the target-level communication component by the target-level communication component.

2. The method according to claim 1, wherein
the method further comprises: parsing, before determining whether the instruction data is the instruction data needed to be processed by the current level of communication component, the instruction data using a pre-stored previous-level communication protocol which is a communication protocol corresponding to a previous level of communication component with respect to the target-level communication component; and
encrypting the instruction data comprises: encrypting parsed instruction data using a pre-stored current-level communication protocol which is a communication protocol corresponding to the target-level communication component.

3. The method according to claim 1, wherein
the method further comprises: parsing, before determining whether the instruction data is the instruction data needed to be processed by the current level of communication component, the instruction data using a pre-stored current-level communication protocol which is a communication protocol corresponding to the target-level communication component; and
encrypting the instruction data comprises: encrypting parsed instruction data using a pre-stored next-level communication protocol which is a communication protocol corresponding to the next level of communication component with respect to the target-level communication component.

4. The method according to any one of claims 2 and 3, wherein
parsing the instruction data comprises: decrypting the instruction data and verifying validity of decrypted instruction data; and
encrypting the instruction data comprises: packaging the parsed instruction data and encrypting packaged instruction data.

5. The method according to claim 1, wherein the method further comprises:
returning, after executing the instruction data by the target-level communication component, result data obtained by executing the instruction data to an initiating-level communication component that initiates the instruction data.

6. The method according to claim 1, wherein the method further comprises:
entering, after issuing the encrypted instruction data to the next level of communication component with respect to the target-level communication component, a timeout waiting state in which the target-level communication component monitors whether result data obtained by executing the instruction data is received within a preset timeout duration;
exiting the timeout waiting state if a monitoring result is positive; and
reissuing the encrypted instruction data to the next level of communication component with respect to the target-level communication component if the monitoring result is negative.

7. An electronic device, comprising a target-level communication component in a multi-level communication system, wherein the target-level communication component comprises:
a determination module configured to determine, after receiving instruction data, whether the instruction data is instruction data needed to be processed by a current level of communication component;
an execution module configured to execute the instruction data if a determination result of the determination module is positive; and
an issuing module configured to encrypt the instruction data and issue encrypted instruction data to a next level of communication component if the determination result of the determination module is negative.

8. The electronic device according to claim 7, wherein
the target-level communication component further comprises a parsing module configured to parse the instruction data using a pre-stored previous-level communication protocol which is a communication protocol corresponding to a previous level of communication component with respect to the target-level communication component; and
the issuing module is further configured to encrypt parsed instruction data using a pre-stored current-level communication protocol which is a communication protocol corresponding to the target-level communication component.

9. The electronic device according to claim 7, wherein
the target-level communication component further comprises a parsing module configured to parse the instruction data using a pre-stored current-level communication protocol which is a communication protocol corresponding to the target-level communication component; and
the issuing module is further configured to encrypt parsed instruction data using a pre-stored next-level communication protocol which is a communication protocol corresponding to the next level of communication component with respect to the target-level communication component.

10. A multi-level communication system, wherein at least one level of communication components in the system is the target-level communication component in the electronic device according to any one of claims 7 to 9.

11. The multi-level communication system according to claim 10, wherein
in the multi-level communication system, each level of communication components except a bottom-level communication component is capable of serving as the target-level communication component.

12. A computer-readable storage medium, storing a computer program thereon, wherein the program, when executed by a processor, implements steps corresponding to the method according to any one of claims 1 to 6.
